Europäisches Patentamt

European Patent Office

Office européen des brevets

(19)

(11) EP 0 764 477 A1

# (12) EUROPEAN PATENT APPLICATION

(43) Date of publication:
26.03.1997 Bulletin 1997/13

(51) Int Cl.6: **B07C 5/342**, B07C 5/10, G01B 11/10

(21) Application number: 96202464.2

(22) Date of filing: 04.09.1996

| | |
|---|---|
| (84) Designated Contracting States:<br>DE FR GB NL | (72) Inventors:<br>• Greuter, Marcel Willem Johannes<br>  9351 RZ Leek (NL)<br>• Wondergem, Jan<br>  8607 KC Sneek (NL) |
| (30) Priority: 21.09.1995 NL 1001256 | |
| (71) Applicant: MIEDEMA<br>LANDBOUWWERKTUIGENFABRIEK B.V.<br>NL-8830 AA Winsum (NL) | (74) Representative: Louet Feisser, Arnold et al<br>Trenité Van Doorne<br>De Lairessestraat 133<br>1075 HJ Amsterdam (NL) |

(54) **Method and device for selecting root crops, such as potatoes**

(57) A method and a device for selecting root crops, such as potatoes, wherein a root crop is moved along scanning means by means of a conveyor belt. The contours of two views of the root crop extending substantially perpendicularly to each other are thereby registered. The scanning means may comprise an optical camera, by means of which the root crop is scanned both directly and via a mirror positioned at an angle with respect to the scanning direction of the camera. On the basis of the sensed contour form of said root crop a classification for the shape of the root crop is computed by means of a computer.

FIG.1

EP 0 764 477 A1

## Description

The invention relates to a method for selecting root crops, such as potatoes. The term potatoes used in the following description is only intended as an example for using the invention, the invention may also be used for selecting any other root crop and also for selecting other products, such as fruits.

Root crops, in particular potatoes, may be selected according to their shape. Potatoes may be selected according to their square dimension, this applies in particular to seed potatoes. The square dimension of a potato is determined by its shape, and that in such a manner that the square dimension is equal to the side of the smallest square hole through which the potato can be passed. This manner of selecting potatoes originates from the time that potatoes were classified on the basis of their size by means of a screening process, whereby square holes of particular dimensions were used.

When selecting root crops it must be aimed at to prevent the root crops from being damaged as much as possible, whilst moreover it is essential to carry out the selection in a precise manner, in order to be able to divide the root crops into groups, whereby the groups must meet the relevant classification requirements as exactly as possible. The value of the root crops is partially dependent on the precision with which a particular quantity of root crop has been composed.

The object of the invention is to provide a method and device which make it possible to classify and/or select root crops efficiently, quickly and in a highly accurate manner. In order to accomplish that objective the root crop, for example potatoes, is according to the invention moved along scanning means by means of a conveyor belt, which scanning means scan and/or register the root crop from two directions extending substantially perpendicularly to each other, which preferably extend substantially perpendicularly to the direction of movement of the root crop. By moving a number of potatoes present one behind the other on a conveyor belt along scanning means, which scan the potatoes from at least two directions extending perpendicularly to each other, sufficient information can be obtained for classifying the potatoes present on the conveyor belt. Depending on the classification of each of the potatoes present on the conveyor belt, each potato may be transported to a place corresponding with said classification, at which place potatoes of the same class are collected. This may for example take place by mechanical means, which push the potato from the conveyor belt at a predetermined location.

According to another aspect of the invention it is possible to register the approximate contours of two views of the root crop extending substantially perpendicularly to each other. Although the entire outside surface configuration of a potato is important for determining the shape of said potato, it has become apparent in practice that a satisfactory approximation of a classification of the potato on the basis of its shape can be obtained on the basis of the contour forms of two views extending perpendicularly to each other.

A satisfactory approximation of said classification may in particular be obtained when the two views have a relatively large and a relatively small area, which may be achieved when the potato is according to another aspect of the invention scanned from the vertical direction and from a horizontal direction. After all, the potato will generally be present on the conveyor belt in such a manner that, seen in plan view, a relatively large area is scanned, whilst in side view, in horizontal direction, a relatively small area will be scanned.

According to another aspect of the invention the root crops are present on the conveyor belt in such a manner that their largest dimension extends substantially in the direction of movement. The potatoes may for example be placed on the conveyor belt in such a manner by depositing the potatoes on the conveyor belt from a relatively narrow chute, or by guiding the material of the conveyor belt, if this material is sufficiently flexible, in the shape of a chute along a certain length, and that in such a manner that the potatoes will be positioned in the longitudinal direction of said chute. When potatoes are placed on the conveyor belt in this manner the largest dimension will be scanned not only in plan view but also in a side view, that is, in horizontal direction perpendicularly to the direction of movement of the conveyor belt. On the basis of said two scannings it is possible to obtain a satisfactorily precise classification relating to the shape of the potato.

According to another aspect of the invention the root crop may be scanned in two directions extending perpendicularly to each other by means of an optical camera, preferably a linear camera, which scans the root crop both directly and via a mirror positioned at an angle with respect to the scanning direction of said camera. This makes it possible to carry out the two relevant scanning operations of the potato by means of a single optical camera, preferably a linear camera. According to another aspect of the invention it is possible to compute a classification of the shape of the root crop on the basis of the sensed contour form of the root crop.

According to another aspect of the invention a classification of the root crop, the square dimension in the case of a potato, is determined by carrying out, by means of a computer, a number of method steps as defined in the claims and as will be explained in more detail hereafter.

According to another aspect of the invention the scanning means are capable of sensing colours and/or shades of grey of the root crop, and an assessment of the quality of the root crop, in this case the quality which indicates the condition of the root crop, is made on the basis of a predetermined standard. In this manner root crops of a deviating condition, for example root crops which are damaged or which are for some other reason not entirely sound, can be selected and removed.

In order to scan the entire outside surface of the root crop said scanning may according to one aspect of the invention take place from two substantially opposite directions, which may for example take place by means of two mirrors which are both positioned at an angle with respect to the scanning direction of the camera. In this manner an optical camera is capable of scanning both the plan view and two side views of the root crop at the same time.

The invention furthermore relates to a device for selecting root crops such as potatoes, which device comprises a conveyor belt on which a root crop can be moved and scanning means by which the root crop can be scanned and/ or registered from two directions extending substantially perpendicularly to each other, which extend substantially perpendicularly to the direction of movement of the root crop. The device may furthermore comprise means for carrying out the method as described above. The device may in particular comprise a computer for making a computation for determining the necessary classifications of the root crops.

Further aspects of the invention, which may be used both separately and in combination with each other, will be described in more detail hereafter and are defined in the claims.

Hereafter an embodiment of the selecting of potatoes will be described by way of illustration with reference to the drawing.

Figure 1 is a schematic view of a device for scanning and/or registering potatoes;
Figures 2 - 5 show the scanning result of a potato in plan view as well as in side view; and
Figures 6 - 8 show the scanning result of another potato in plan view as well as in side view.

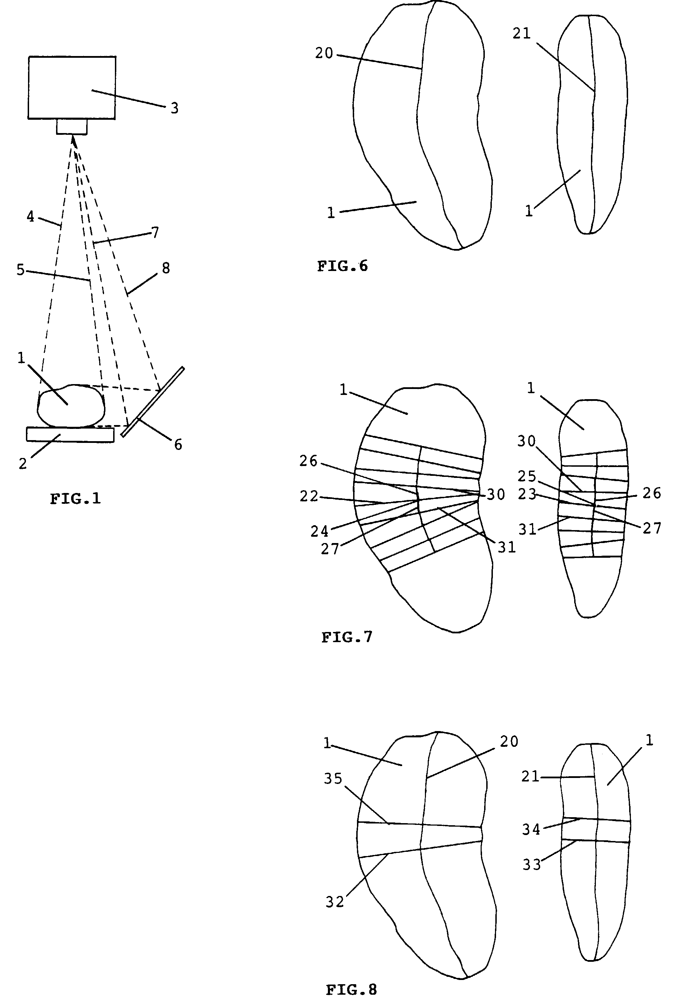

Figure 1 is a schematic view of the manner in which the scanning of a potato takes place. A potato 1 is present on a conveyor belt 2, which moves said potato 1 in a direction perpendicularly to the plane of the drawing at a velocity of for example 0.5 - 1 m per second. A camera 3, preferably a linear camera, is positioned above conveyor belt 2, which camera scans the potato 1 from above, as is indicated by means of dashed lines 4, 5. A mirror 6 is placed beside conveyor belt 2, and that at such an angle with respect to the scanning direction of camera 3 that it is possible to scan the side of potato 1, as is indicated by means of dashed lines 7, 8.

Because potato 1 is moving on conveyor belt 2 with respect to camera 3, camera 3 is capable of scanning a plan view as well as a side view of potato 1 in the illustrated arrangement. Linear camera 3 thereby scans the potato in the form of lines extending perpendicularly to the direction of movement of conveyor belt 2.

In this manner camera 3 is capable of sensing the shape of the plan view and that of the side view of potato 1, it is also possible, however, to sense the colour or the shade of grey of potato 1, possibly simultaneously, by means of camera 3, in order to be able to assess whether the condition of potato 1 meets the requirements.

It is thereby possible to place a second mirror (not shown in Figure 1), likewise at an angle with respect to the scanning direction of camera 3, but on the other side of conveyor belt 2. As a result of this two side views, taken in opposite directions, of potato 1 can be obtained. Thus a large part of the outside surface of potato 1 is scanned, so that a satisfactory assessment of the condition of potato 1 can be made.

On the basis of the contour form of the side view and the contour form of the plan view it is possible to determine the approximate square dimension of potato 1, and that in a manner which has in practice appeared to be sufficiently reliable.

The angle at which mirror 6 is positioned with respect to the scanning direction of camera 3 is preferably slightly less than 45°, in order to obtain an optimally accurate side view of potato 1. Moreover, it will be apparent that the side view of potato 1 is scanned at a larger distance by camera 3 than the plan view of potato 3, so that the sensed side view must be corrected in relation to the sensed plan view. This correction depends on the position of the potato on conveyor belt 2, which position may be determined on the basis of the sensing of the plan view of potato 1 by camera 3.

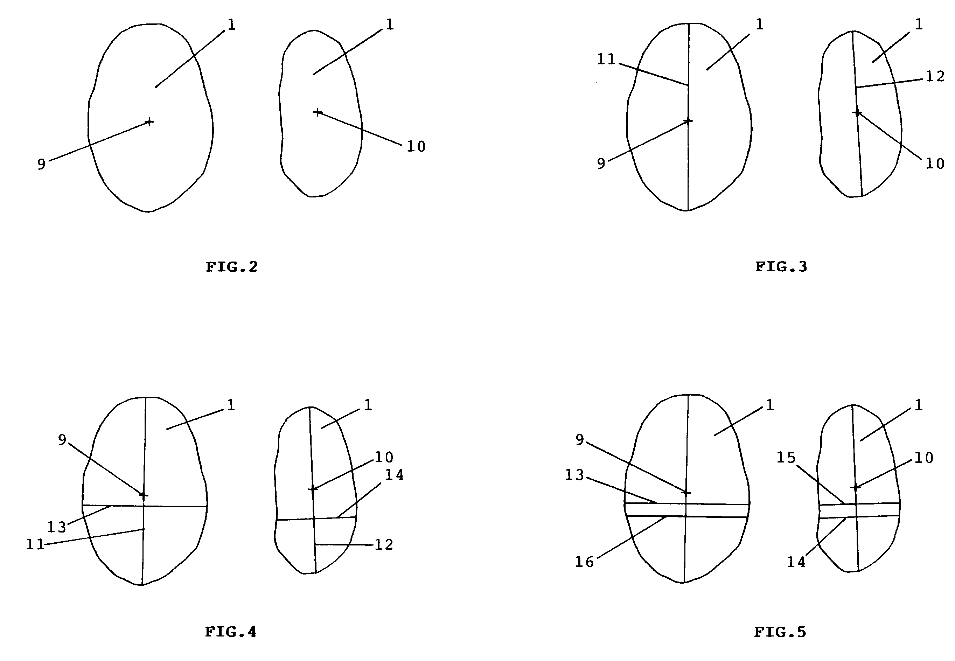

In Figures 2 - 8, which each show a plan view and a side view of a potato, the side view (on the right) is therefore shown at a smaller scale than the plan view (on the left), namely in the manner in which camera 3 senses the two views. When carrying out computations on the basis of the two views a correction is always made in connection with the difference in scale. The location where the plan view is sensed is used for determining the distance at which the side view is sensed. In a corresponding manner the plan view may be corrected on the basis of the "height" of the potato which is sensed in side view.

After the plan view of potato 1 and the side view of potato 1 have been registered by camera 3, a computation may be made in a number of method steps, with the square dimension of potato 1 as the result. In practice it has become apparent that the method steps can be carried out by a computer at a speed which is sufficiently high for carrying out the selection of potatoes present one behind the other on a conveyor belt at a desired speed.

The following method steps are carried out by a computer, whereby the cross dimension sensed in plan view will generally be called the width (or length "B) of potato 1 and the cross dimension sensed in side view will generally be called the height (or length "H") of potato 1 for easy reference. In the method steps it is furthermore assumed that the potato is present on conveyor belt 2 in such a manner that its longest dimension substantially corresponds with the direction of movement of conveyor belt 2.

Figures 2 - 5 each show the plan view of a potato 1 on the left and the side view of potato 1 on the right. In the first method step (a) the centre of gravity is determined for both views, in the manner which is usual in geometry. The formula to be used is:

$$(x_0, y_0) = \left| \frac{1}{N} \sum_{i=1}^{N} x_i, \frac{1}{N} \sum_{i=1}^{N} Y_i \right| \tag{1}$$

In Figure 2 the location of the centre of gravity in each of the views is indicated by a cross 9, 10.

In the second method step (b) a straight line through the centre of gravity is determined for both the plan view and the side view, which line corresponds with the axis of minimum inertia, as is known in mechanics. Figure 3 shows this line 11, 12 for both views. The angle $\alpha$ which this line includes with the direction of movement of conveyor belt 2 is computed as follows:

$$I_x = \frac{1}{N} \sum_{i=1}^{N} (y - y_0)^2$$

$$I_y = \frac{1}{N} \sum_{i=1}^{N} (x - x_0)^2 \tag{2}$$

$$P_{xy} = \frac{1}{N} \sum_{i=1}^{N} (x - x_0)(y - y_0)$$

$$\tan 2\alpha = \frac{2P_{xy}}{I_y - I_x}$$

In a next method step (c) it is attempted to find a line which has the greatest length and which intersects line 11 and line 12 respectively (both lines representing the axis of minimum inertia) perpendicularly. Generally the location of said line in the plan view will be different from that in the side view. In Figure 4 said line (maximum width) is indicated as line 13 in the plan view, and in the side view said line (maximum height) is indicated as line 14.

In a next method step (d) the height of the potato is determined at the location of the maximum width, and the width of the potato is determined at the location of the maximum height. This is illustrated in Figure 5. The location of line 15 in the side view corresponds with that of line 13 in the plan view, and consequently the length of line 15 is the height of the potato at the location of the maximum width (line 13). In a corresponding manner the length of line 16 in the plan view of Figure 5 is the width of the potato at the location of the maximum height (line 14).

In a next method step (e) two computations are made for each of the two associated heights and widths, that is, for the maximum height and the width associated therewith and for the maximum width and the height associated therewith. For both dimensions a value is determined which equals the root of half the sum of the square of the width and the square of the height associated therewith. This can be illustrated as follows in a formula, wherein said value is indicated as VM (square dimension).

$$VM_i = \sqrt{\frac{1}{2}(B_i^2 + H_i^2)} \tag{3}$$

wherein i = 1, 2, B is the width and H is the height.

In a final method step (f) the square dimension (VM) for the potato 1 in question is set to be equal to the larger of the two values just computed.

In practice the square dimension of a potato which has been computed in this manner appears to be a satisfactory approximation of the actual square dimension such as can be measured by passing the potato through a square hole, as has already been explained before.

In order to obtain an improved approximation for those cases where the potato has a shape which strongly deviates from an ellipsoid, for example a so-called banana shape, the above method may be used, whereby the line which is determined by method step (b) (axis of minimum inertia) is determined by means of an alternative method step (b'), thereby determining a line 20 (Figure 6) which is not straight, as is the axis of minimum inertia, but which is curved and thus more or less follows the shape of the potato.

Figure 6 shows another potato 1 in plan view (on the left) and in side view (on the right), which potato has a so-called banana shape, which is clearly apparent in the plan view (on the left). Instead of the axis of minimum inertia the so-called morphologic line 20,21 is shown in Figure 6, both in the plan view and in the side view. One property of said morphologic line 20,21 is the fact that it consists of a curve, whereby it applies for each point on said curve that the two distances to the edge of the views, perpendicularly to the curve in both directions, are equal.

Figure 7 shows how said morphologic line can be determined by approximation. First line 22,23, which extends through the centre of gravity and which is perpendicular to the axis of minimum inertia, is determined. Said line 22,23 constitutes the starting point for determining the morphologic line. The centre 24,25 of said line is determined for each of the views, and from said centre 24,25 the perpendicular bisector 26,27 is determined, and that in both directions. A distance of a predetermined short length is set off on the perpendicular bisector in each of the directions, and line 30,31, which has the property of being equally long on either side of the perpendicular bisector 26,27, is determined on the location of the perpendicular bisector 26,27 thus found. Then a perpendicular bisector is determined once again on said line, and a line having the properties as referred to in connection with line 30,31 is determined once again at one point of said perpendicular bisector located, at the aforesaid distance from previously found line 30,31.

By constantly repeating this procedure the aforesaid distances on the perpendicular bisectors together form the morphologic line of the view in question. In practice it has become apparent that a distance of a few millimetres results in a sufficiently accurate determination of the morphologic line. Figure 7 only shows how the morphologic line is determined for part of the two views.

It is also possible to determine a morphologic line, being a curve which is located centrally in the view and which follows the shape of the view to a certain extent, in different manners.

Figure 8 shows the morphologic line in the plan view and in the side view of potato 1, and in addition to that the lines which have been determined in the above method step (d), namely the largest width 32 and the height 33 associated therewith, and the largest height 34 and the width 35 associated therewith.

Then the root of twice the sum of the squares of the width and the height associated therewith is determined in accordance with method step (e), after which the larger of said two values is used as the square dimension (method step f).

Although it is not necessary to use method step (b') instead of method step (b) in order to obtain a satisfactory result, the use of method step (b') will lead to an improved result.

Preferably also the weight of each of the potatoes 1 present on conveyor belt 2 is determined by means known per se. This makes it possible to compose precisely determined quantities of selected potatoes by computer control.

## Claims

1. A method for selecting root crops, such as potatoes, wherein the root crop is moved along scanning means (3) by means of a conveyor belt (2), which scanning means scan and/or register the root crop (1) from two directions extending substantially perpendicularly to each other.

2. A method according to claim 1, characterized in that said two directions extend substantially perpendicularly to the direction of movement of the root crop (1).

3. A method according to any one of the preceding claims, characterized in that at least the approximate contours of two views of the root crop extending substantially perpendicularly to each other are registered.

4. A method according to any one of the preceding claims, characterized in that said two directions extending perpendicularly to each other are the substantially vertical direction and a substantially horizontal direction.

5. A method according to any one of the preceding claims, characterized in that said root crops lie on the conveyor belt (2) in such a manner that their largest dimension extends substantially in the direction of movement of the conveyor belt (2).

6. A method according to any one of the preceding claims, characterized in that said scanning means (3) comprise an optical camera, by means of which the root crop (1) is scanned both directly and via a mirror (6) positioned at an angle with respect to the scanning direction of said camera.

7. A method according to any one of the preceding claims, characterized in that a classification for the shape of the root crop is computed on the basis of the sensed contour form of said root crop.

8. A method according to claim 7, characterized by the following steps for each of the two sensed views of the root crop extending perpendicularly to each other:

(a) determining the centre of gravity (9,10) of said view,
(b) determining the axis of minimum inertia (11,12) through the centre of gravity (9,10) for said view,
(c) determining in said view the line (13,14), and the length of said line, which intersects the axis of minimum inertia (11,12) perpendicularly and which has a maximum length,
(d) determining in the other view the length of the line (15,16) which intersects the axis of minimum inertia (11,12) perpendicularly at the location which corresponds with the line (13,14) determined in step (c),
(e) determining the value which is equal to the root of half the sum of the squares of the length determined in step (c) and the length determined in step (d), and subsequently
(f) determining the classification which is equal to the larger of the two values determined for both views in step (e).

9. A method according to claim 8, characterized in that instead of determining the axis of minimum inertia (step b), the morphologic line (20,21) is determined (step b') and used, which line consists of a curve, whereby it applies for each point on said curve that the two distances to the edge of the view, perpendicularly to the curve in both directions, are substantially equal.

10. A method according to any one of the preceding claims, characterized in that said scanning means (3) sense colours and/or shades of grey of the root crop (1), after which an assessment of the quality of the root crop is made on the basis of a predetermined standard.

11. A method according to claim 10, characterized in that said scanning means (3) scan the root crop (1) from two substantially opposite directions.

12. A method according to claim 11, characterized in that said scanning means (3) comprise an optical camera, by means of which the root crop (1) is scanned via two mirrors, which are both positioned at an angle with respect to the scanning direction of said camera.

13. A method according to any one of the preceding claims, characterized in that also the weight of the root crops (1) present on the conveyor belt (2) is measured.

14. A device for selecting root crops such as potatoes, which device comprises a conveyor belt (2) on which a root crop (1) can be moved and scanning means (3) by which the root crop (1) can be scanned and/or registered from two directions extending substantially perpendicularly to each other, which extend substantially perpendicularly to the direction of movement of the root crop (1).

15. A device according to claim 14, characterized in that said two directions extending perpendicularly to each other are the substantially vertical direction and a substantially horizontal direction.

16. A device according to claim 14 or 15, characterized in that said scanning means (3) comprise an optical camera and a mirror (6) positioned at an angle with respect to the scanning direction of said camera, by means of which the root crop (1) can be scanned both directly and via said mirror (6).

17. A device according to claim 16, characterized by a second mirror which is positioned at an angle with respect to the scanning direction of said camera (3), in such a manner that said camera (3) is capable of scanning the root crop (1) via two mirrors from substantially opposite directions.

18. A device according to any one of the preceding claims, characterized by means for determining the weight of each root (1) present on the conveyor belt (2).

19. A device according to any one of the claims 14 - 18, characterized by a computer for carrying out the method or method steps according to any one of the claims 1 - 13.

FIG.1

FIG.6

FIG.7

FIG.8

FIG.3

FIG.5

FIG.2

FIG.4

8

EP 0 764 477 A1

**European Patent Office**

## EUROPEAN SEARCH REPORT

**Application Number**

EP 96 20 2464

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 258 810 (MAKI SEISAKUSHO) 9 March 1988<br><br>* abstract *<br>* column 9, line 42 - line 51 *<br>* column 12, line 8 - line 21 *<br>* column 13, line 50 - line 57 *<br>* figures 1,6 *<br>--- | 1,3,4,6, 7,10-12, 14-17,19 | B07C5/342 B07C5/10 G01B11/10 |
| X | US-A-4 645 080 (SCOPATZ) 24 February 1987<br><br>* abstract *<br>* column 2, line 58 - line 60 *<br>* column 3, line 8 - line 53 *<br>* column 6, line 8 - line 30 *<br>* figures 1,2 *<br>--- | 1-3,10, 11,14,19 | |
| A | US-A-4 767 212 (KITAHASHI) 30 August 1988<br><br>* column 1, line 10 - line 13 *<br>* column 7, line 43 - line 66 *<br>* figure 10 *<br>--- | 1,13,14, 18,19 | |
| A | GB-A-2 182 437 (HAJIME) 13 May 1987<br>* page 1, line 6 - line 20 *<br>* page 1, line 40 - line 47 *<br>* page 1, line 96 - page 2, line 2 *<br>* page 2, line 113 - line 125 *<br>* figure 2 *<br>--- | 8 | **TECHNICAL FIELDS SEARCHED** (Int.Cl.6)<br><br>G01N |
| A | FR-A-2 707 008 (PEUGEOT) 30 December 1994<br>* abstract *<br>* page 4, line 12 - line 15 *<br>* figure 3B *<br>----- | 8,9 | |

The present search report has been drawn up for all claims

| Place of search | Date of completion of the search | Examiner |
|---|---|---|
| THE HAGUE | 19 December 1996 | Thomas, R.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9